# EUROPEAN PATENT APPLICATION

(11) **EP 1 220 410 A2**
(43) Date of publication of application: **03.07.2002**
(21) Application number: 01204644.7
(22) Date of filing: 29.11.2001
(51) Int. Cl.: H02H 3/20, H02H 3/33

(54) **An overvoltage protection accessory device for a residual current circuit breaker**

(30) Priority: 29.12.2000 IT MI002871
(71) Applicant: ABB Service Srl, 20135 Milano (IT)
(72) Inventor: Colombo, Franco, 21046 Malnate (VA) (IT); Brazzola, Claudio, 20144 Milano (IT); Antonello, Paolo, 20010 Arluno (MI) (IT)
(74) Representative: Giavarini, Francesco

(57) **Abstract**

An accessory device for protection against permanent overvoltages in a low voltage power distribution line. The accessory device is aimed at coupling to a RCCB, which comprises:
- a couple of a electrical contacts including a fixed contact and a movable contact, said movable contact being uncoupled from said fixed contact, during an opening operation of said RCCB; and
- sensor means, suitable to generate one or more sensing signals, which are indicative of the presence of an imbalance current between the phase and/or neutral conductors of said power distribution line; and
- release means, which are electrically coupled to said sensor means, said release means being operatively connected to said movable contact in order to uncouple said movable contact from said fixed contact upon activation by said sensor means.

The accessory device, comprises first electronic means, suitable to generate an electrical intervention signal, when the voltage value of the power distribution line exceeds a first preset threshold value. The electrical intervention signal is suitable to determine an opening operation of the RCCB, so as to provoke the interruption of the power distribution line.

## Description

The present invention relates to an accessory device for a residual current circuit breaker.

In particular, the present invention relates to an accessory device, which provides protection against permanent overvoltages and is particularly suitable for use in single-phase or multiple-phase (two-phase, three-phase, and the like) applications at low voltages (i.e. with operating voltages around 1000 V or less).

Residual current circuit breakers (hereinafter referred as RCCBs) are well known in the background art. As notorious, a RCCB is basically aimed at ensuring protection against fault currents, in a power distribution line. For this scope, a RCCB generally comprises a current transducer, which is suitable to detect the presence of an imbalance current between the phase and/or neutral conductors of the power distribution line. The presence of an imbalance current is indicative of the existence of an earth fault leakage current in the power distribution line.

When an imbalance current is detected, the current transducer provides a signal, which is capable to activate an electromagnetic release device, operatively connected to the electrical contacts of the RCCB. The electromagnetic release device causes the separation of the electrical contacts of the RCCB and, therefore, the interruption of the power distribution line. The coupling between the current transducer and the electromagnetic release device can be substantially direct or, alternatively, performed in an indirect manner. In the second case, an electronic control circuit is interposed between the current transducer and the electromagnetic release device. In this case, RCCBs are usually defined as RCCBs of the "electronic type".

Known RCCBs have some drawbacks.

It is known that, in some operating conditions, a low voltage power distribution line may be affected by permanent overvoltages. These phenomena might be due to particular configurations of the power distribution line itself or faults or other reasons. Permanent overvoltages can cause malfunctions or faults in the electrical loads, connected downstream the RCCB. Known RCCBs can actually offer an effective protection only against fault currents. In fact, due to the operating principle on which they are generally based (which has been shortly described above), they can difficulty provide a suitable protection of a load from permanent overvoltages, with satisfactory operating reliability levels and at low cost.

Accordingly, the aim of the present invention is to provide an accessory device for protection against permanent overvoltages in a low voltage power distribution line, which allows the RCCB coupled therewith to provide protection against permanent overvoltages, so as to overcome the drawbacks of the state of the art.

Within the scope of this aim, an object of the present invention is to provide an accessory device, which has a high level of reliability, particularly in hard operating conditions, such as in presence of transients high-value pulsed voltages (induced for example, by lightning phenomena) or in presence of high-value pulsed voltages (for example with a peak value higher than 600 V).

Another object of the present invention is to provide an accessory device, which can be easily associated to a RCCB, with a high level of flexibility in use.

Another object of the present invention is to provide an accessory device, which is relatively simple and can be manufactured and installed at relatively low cost.

Thus, the present invention provides an accessory device for protection against permanent overvoltages in a low voltage power distribution line. The accessory device is aimed at coupling to a RCCB, which comprises at least:
- a couple of a electrical contacts including a fixed contact and a movable contact, the movable contact being uncoupled from the fixed contact, during an opening operation of said RCCB; and
- sensor means, suitable to generate one or more sensing signals, which are indicative of the presence of an imbalance current between the phase and/or neutral conductors of the power distribution line; and
- release means, which are electrically coupled to the sensor means, the release means being operatively connected to the movable contact in order to uncouple the movable contact from said fixed contact upon activation by the sensor means.

The accessory device, according to the present invention, is characterized in that it comprises first electronic means, suitable to generate an electrical intervention signal, when the voltage value of the power distribution line exceeds a first preset threshold value. The electrical intervention signal is suitable to determine an opening operation of the RCCB, so as to provoke the interruption of the power distribution line.

Further characteristics and advantages will become apparent from the following description of some embodiments of the accessory device, according to the present invention, illustrated only by way of non-limitative example in the accompanying drawings, wherein:
figure 1 is a diagram which schematically represents the accessory device, according to the present invention, and a RCCB, associated therewith; and
figure 2 is a diagram, which schematically illustrates the operations of the an accessory device, according to the present invention, and a RCCB, associated therewith; and
figure 3 is a circuit diagram of a detail of a first embodiment of an accessory device, according to the present invention; and
figure 4 is a circuit diagram of a detail of a second embodiment of an accessory device, according to the present invention; and
figures 5a, 5b and 5c illustrate various embodiments of a low voltage power distribution switchboard, including an accessory device, according to the present invention, and a RCCB, associated therewith.

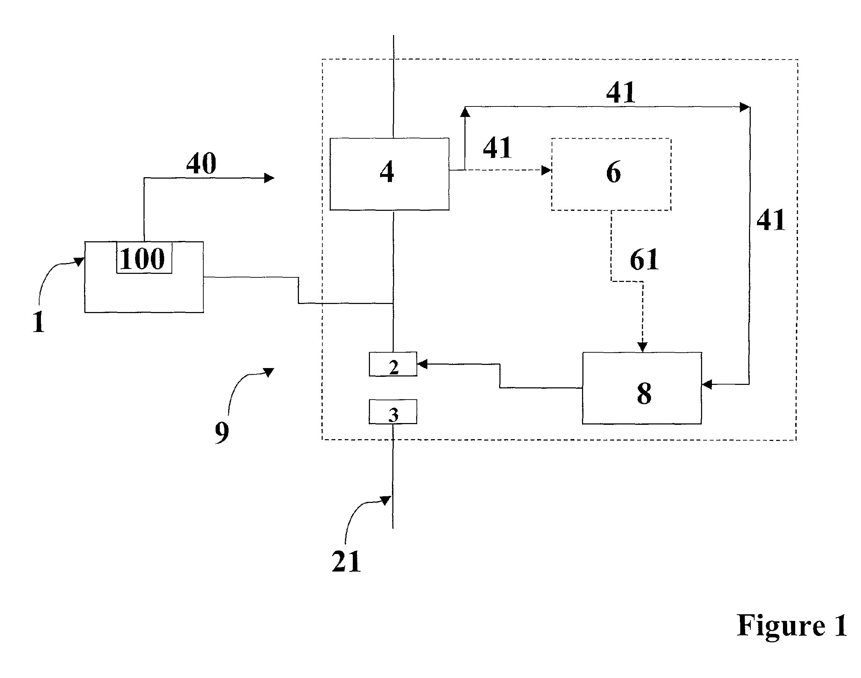

With reference to Figure 1, the accessory device 1, according to the present invention, is basically aimed at protection against permanent overvoltages on a low voltage power distribution line 21. With the term "permanent overvoltage", it is meant a status of the power distribution line 21, in which its voltage value reaches values higher than a predefined threshold for a relatively long time (e.g. for a period of time substantially comparable with a period of an AC current or longer). The accessory device 1 is meant at coupling to a RCCB 9. Advantageously, the RCCB 9 comprises at least a couple of electrical contacts, i.e. at least a fixed contact 2 and a movable contact 3. The movable contact 3 is arranged, so as to be uncoupled from the fixed contact 2, during an opening operation of the RCCB 9. The RCCB 9 comprises also sensor means 4, which are suitable to generate one or more sensing signals 41, indicative of the presence of an imbalance current between the phase and/or neutral conductors of the power distribution line 21. As mentioned above, the presence of an imbalance current indicates, generally, the existence of an earth leakage current, generated by a fault event on the power distribution line 21. In a preferred embodiment of the present invention, the sensing means 4 may comprise a current transducer, including a magnetic toroidal core, provided with a primary winding, which comprises one or more phase conductors of the power distribution line 21 that are enclosed by the magnetic toroidal core. The magnetic toroidal core is also provided with a secondary winding, which includes one or more turns that provide in output the sensing signals 41. Release means 8 are comprised in the RCCB 9, too. They are operatively connected to the movable contact 3. In this manner they can uncouple the movable contact 3 from the fixed contact 2 upon activation by the sensing means 4.

In an advantageous embodiment of the present invention, the RCCB 9 is of the electronic type. In this case, the sensor means 4 and the release means 8 are connected in indirect manner. In fact, in this case, the RCCB 9 comprises also second electronic means (see dotted block 6 of figure 1), electrically connected to the sensor means 4. The second electronic means 6 are suitable to generate, upon receiving the sensing signals 41, one or more control signals (see dotted arrows 61 of figure 1). Then, these control signals can activate the release means 8.

The peculiarity of the accessory device 1 consists of the fact that it comprises first electronic means 100, which are capable to generate an intervention signal 40, when the voltage value of the power distribution line 21 exceeds a first preset threshold value. This electrical intervention signal 40 is generated, so as to be suitable to determine an opening operation of the RCCB 9, in order to provoke the interruption of the power distribution line 21. In practice, each time an overvoltage phenomenon is present on the power distribution line 21, the accessory device 1 is capable to activate, by means of the intervention signal 41, the RCCB 9 associated therewith. In this manner, the RCCB 9, provided with an associated accessory device 1, is able to guarantee protection to an electric load (located downstream of the RCCB 9) against permanent overvoltage phenomena, ensuring, at the same time, an effective protection against earth leakage currents.

The first threshold value can be changed according to the needs. In this manner, the accessory device 1 can be designed, so as to be sensitive to overvoltage phenomena of different magnitude, according to the needs. In a preferred embodiment of the present invention, this capability of the accessory device 1, is ensured by virtue of the fact that the first electronic means 100 can generate the intervention signal 40 as a current intervention signal, provided with a predefined current intensity. Advantageously, the first electronic means 100 are connected (dotted arrows 500) to the power distribution line 21 according to an arrangement, which determines, once the intervention signal 40 is generated, the presence of a predefined first imbalance 401 current, which can be sensed by the sensor means 4. In practice, the first electronic means 100 are preferably connected to the power distribution line in a manner, which allows the sensor means 4 to indirectly detect the presence of the intervention signal 40 (generated as a current signal), as it were an imbalance current, due to a fault event.

Upon detecting the first imbalance current 401, the sensor means 4 generate first sensing signals 410 and, according to the normal operation of a RCCB, the release means 8 are activated, in order to uncouple the movable contact 3 from the fixed contact 2.

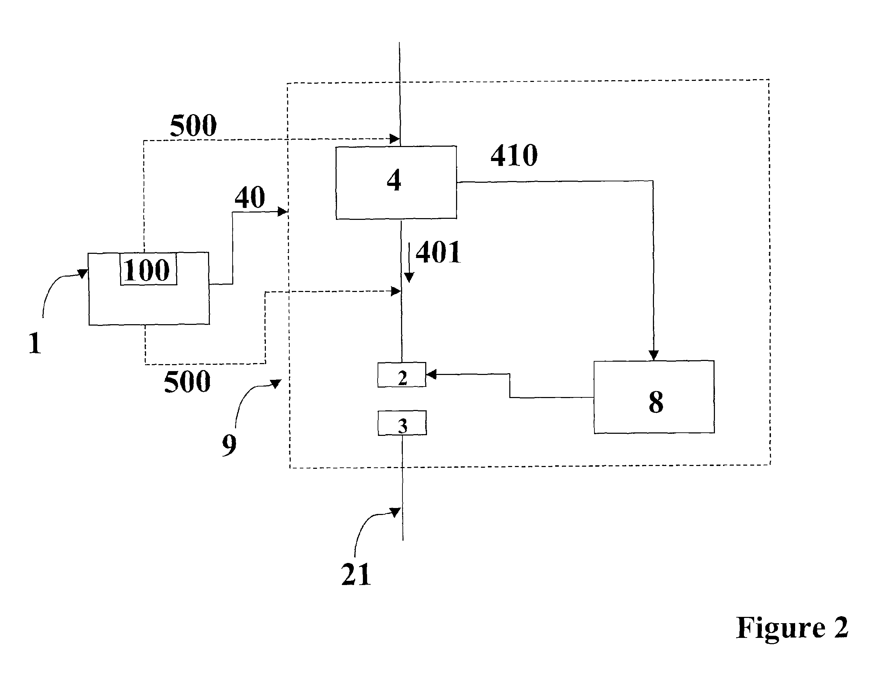

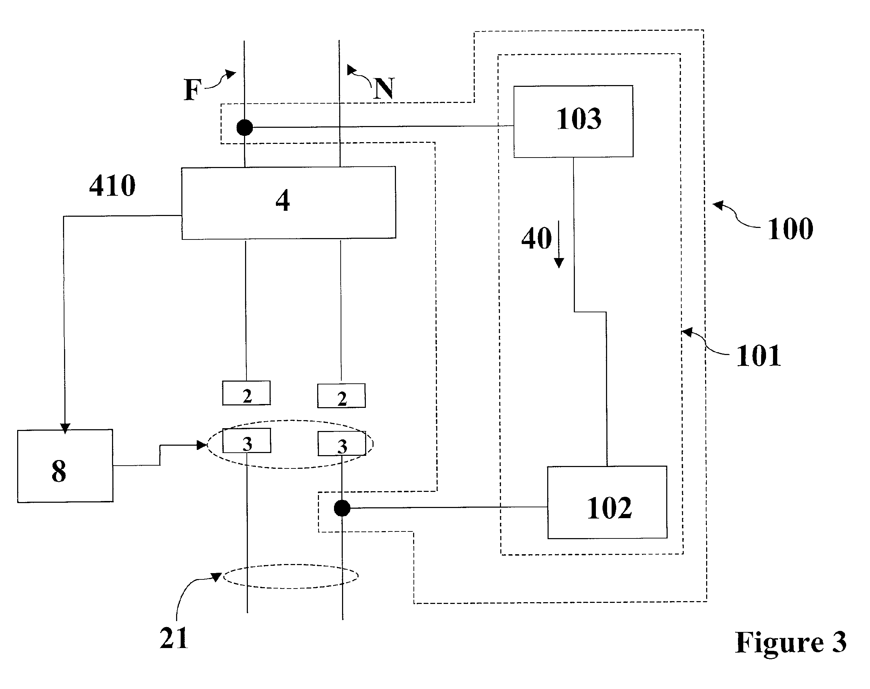

In an preferred embodiment of the present invention (figure 3), the first electronic means 100 comprise a first signal generation circuit 101, which is connected between the neutral conductor N and a phase conductor F of the power distribution line 21. Advantageously, the first signal generation circuit 101 is connected respectively downstream and upstream the sensor means 4. Preferably, the first signal generation circuit 101 comprises a first threshold circuit element 102, which is connected, downstream the sensor means 4, to the neutral conductor N of the power distribution line 21. Further, the first signal generation circuit 101 comprises preferably a first resistive element 103, which is serially connected to the first threshold circuit element 101 and is connected, upstream the sensor means 4, to a phase conductor F of the power distribution line 21. As a constructive choice, the first threshold element 102 might comprise a first surge arrester element, which, in presence of an overvoltage phenomenon on the power distribution line 21, closes its electrodes and allow the passage of an electrical current, which is regulated by the resistive element 103. The electrical current is, in this case, the intervention signal 40 (generated as a current intervention signal) and, thanks to the described electrical connections, it can be seen as an imbalance current (the first imbalance current 401 of figure 2) by the sensor means 4. This constructive solution is particularly advantageous, since it offers considerable simplicity of installation by requiring only two electrical connections. As can be easily deduced, by appropriately choosing the threshold voltage value of the first threshold element 102 and/or the resistance value of the resistive element 103, it is possible to obtain adequate protection against permanent overvoltages on the power distribution line 21.

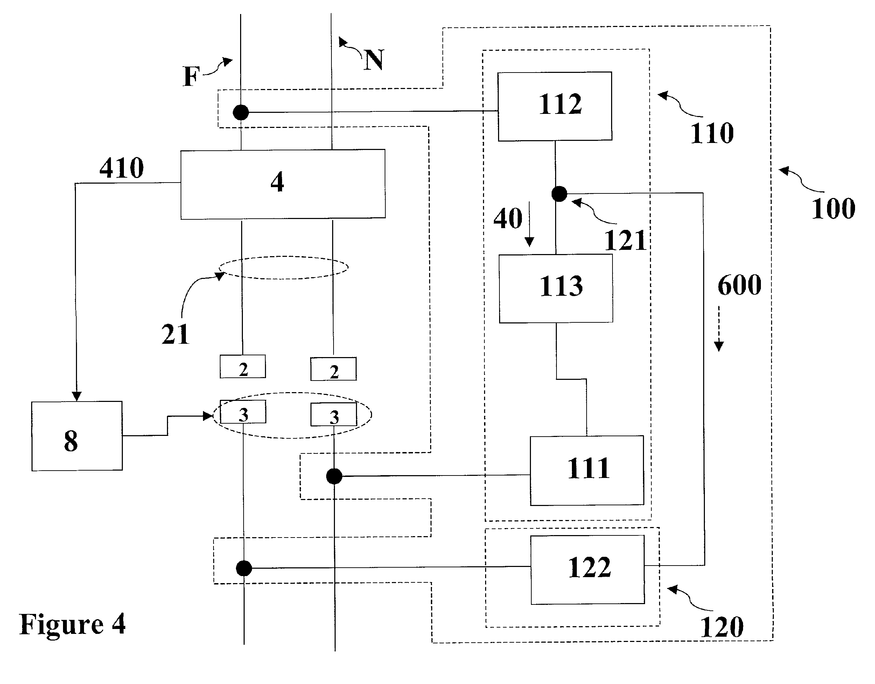

In another advantageous embodiment of the present invention (figure 4), the first electronic means 100 comprise a second signal generation circuit 110. The second signal generation circuit 110 is connected between the neutral conductor N and a phase conductor F of the power distribution line 21, downstream and upstream the sensor means 4. Preferably, the second signal generation circuit 110 comprises a second threshold circuit element 111 (for example a second surge arrester), electrically connected downstream the sensor means 4 to the neutral conductor N, and a second resistive element 112 and a third resistive element 113 in series. The resistive elements 112 and 113 are serially connected to the second threshold circuit element 111. In particular, the second resistive element 112 is connected, upstream the sensor means 4, respectively to the phase conductor F and the third resistive element 113, while the third resistive element 113 is connected between the second resistive element 112 and the second threshold circuit element 111.

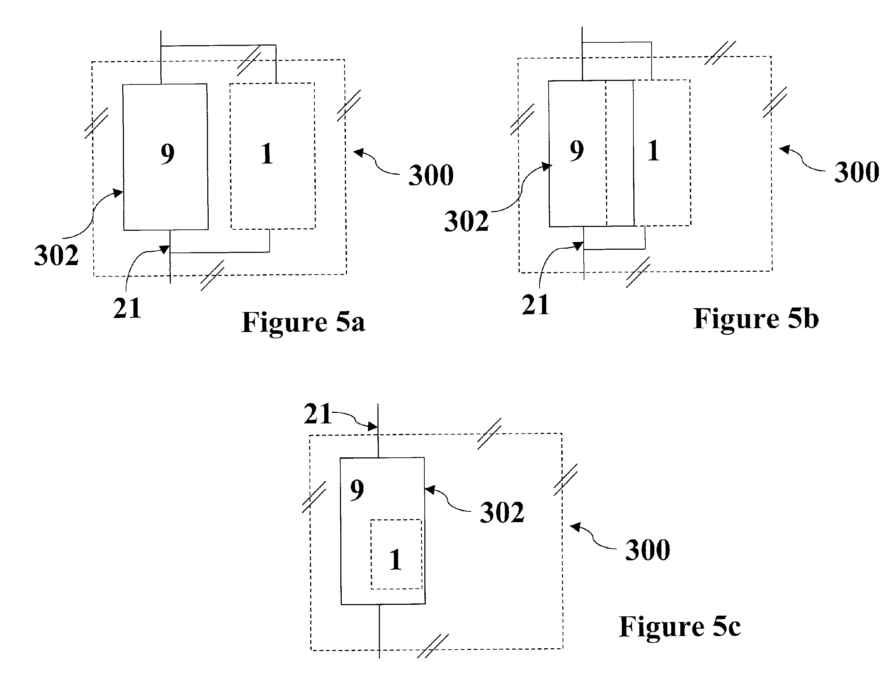

Advantageously, the first electronic means 100 can comprise also a signal bypass circuit 120, which is aimed at bypassing the electrical intervention signal 40, when the voltage value of the power distribution line 21 exceeds a second preset threshold value, higher than the first preset threshold value mentioned above. Preferably, the signal bypass circuit 120 can be connected between the second signal generation circuit 110 and the phase conductor F of the power distribution line 21, downstream or upstream the sensor means 4. In particular, the signal bypass circuit 120 can be connected between the phase conductor F and a common node 121 between the second resistive element 112 and the second threshold circuit element 111. Preferably, the signal bypass circuit 120 comprises a third threshold circuit element 121, whose threshold value is equal to the threshold value of the second threshold circuit element 111. In practice, when an overvoltage phenomenon is present the second threshold element 111 causes the intervention signal 40 to flow. As described above, the intervention signal 40 is a current signal and is seen as an imbalance current by the sensor means 4. The signal bypass circuit 120 is meant to prevent the accessory device 1 from causing an inappropriate tripping of the RCCB, following a high-value transient voltage, due, for example, to lightening phenomena. In presence of a high voltage pulse, if the signal bypass circuit 120 were not present, the second threshold 111 would, in fact, remain triggered until the voltage across it returned to zero (in the case of an AC voltage current, until the end of the half-period). Accordingly, in presence of a voltage pulse (which by definition cannot be considered a permanent overvoltage), the second threshold element 111 might remain closed too long, causing the unfair opening of the RCCB. The use of the signal bypass circuit 120 is meant to divert (see dotted arrow 600 of figure 4) the electrical current signal 40 from the branch with the phase F upstream of the RCCB 9 to the branch with the phase F downstream the sensor means 4. The level of intervention of the signal bypass circuit 120 is advantageously determined by the divider provided by the resistors 112 and 113. This level of intervention is a second threshold voltage level higher than the mentioned first threshold voltage level, which was determined by the threshold level of the second threshold element 111. During normal operation, the third threshold element 122, included in the signal bypass circuit 120, is not triggered: in fact, the voltage across it, divided between the two resistors 112 and 113, is approximately half of the voltage across the power distribution line 21. However, when the voltage of the power distribution line 21 rises considerably (as usually happens in case of voltage pulse), the voltage divided between the two resistors 112 and 113 becomes enough high to trigger the third threshold element 122, too. Thus, the intervention signal 40 is diverted into the bypass circuit 120. In this manner, the intervention signal 40 can no longer be seen by the sensor means 4 as an imbalance current but it is considered as a simple load current. Accordingly, the RCCB is not forced to intervene. Essentially, therefore, in presence of permanent overvoltages the accessory device 1 causes the opening of the RCCB. In the presence of high-level pulsed voltages, instead, the same accessory device 1 provides for automatically blocking the intervention of the RCCB. This allows to achieve an additional protection function, which avoids the inappropriate tripping of the RCCB and protects the load against transient overvoltages, caused, for example, by atmospheric phenomena (lightning). Optimization of the features described above, can, of course, be obtained by appropriately sizing the second threshold element 111 and the third threshold element 122, particularly according to the closure time of their electrodes and the maximum allowable nominal current value. With reference to figures 3 and 4 some examples of connections to a phase and a neutral conductor have been shown. Obviously, different equivalent connections to a phase and a neutral conductor can be implemented, according to the needs. In fact, from the description above, it can be seen that the very essential feature for the correct operation of the first signal generation circuit 101 and/or the second signal generation circuit 110 consists of the fact that these circuits have to be connected with the terminals respectively upstream and downstream the sensor means 4. With reference to figure 5, it is possible to observe various embodiments of a low voltage power distribution switchboard 300, including an accessory device 1, according to the present invention and a RCCB 301, associated therewith. The facility and flexibility of use of the accessory device 1, according to the present invention, can be easily appreciated. For example, according to the needs, the accessory device 1 can be positioned substantially externally (figure 5a) to the external casing 302 of the RCCB 301 or alternatively at least partially included in the external casing 302 (figure 5b). Alternatively, as illustrated in figure 5c, the accessory device can be integrated with the RCCB 301. In practice, as illustrated in figures 5a-5c the accessory device 1 could be fabricated as a sole-standing device or at least partially integrated with the RCCB associated therewith, according to the needs. As mentioned above, accessory device 1 can be easily associated to RCCBs of different types, such as, for example, RCCBs of the electronic type. The accessory device 1, according to the present invention, allows to fully achieving the intended aims and objects. In fact, it is possible to achieve high operating reliability together with considerable immunity to transients induced by lightning and to pulsed voltages of relatively high value (for example above 600 V). Finally, the practice has shown that the accessory device 1, according to the present invention, is relatively simple to manufacture and at competitive costs.

The accessory device, according to the present invention, thus conceived is susceptible of numerous modifications and variations, all of which are within the scope of the inventive concept.

All the details may further be replaced with other technically equivalent elements.

## Claims

1. An accessory device for protection against permanent overvoltages in a low voltage power distribution line, said accessory device being aimed at coupling to a RCCB, which comprises at least:
- a couple of a electrical contacts including a fixed contact and a movable contact, said movable contact being uncoupled from said fixed contact, during an opening operation of said RCCB; and
- sensor means, suitable to generate one or more sensing signals, which are indicative of the presence of an imbalance current between the phase and/or neutral conductors of said power distribution line; and
- release means, which are electrically coupled to said sensor means, said release means being operatively connected to said movable contact in order to uncouple said movable contact from said fixed contact upon activation by said sensor means.
**characterized in that** it comprises first electronic means for generating an electrical intervention signal, when the value of the voltage of low voltage said power distribution line exceeds a first preset threshold value, said electrical intervention signal being suitable to determine an opening operation of said RCCB, so to provoke the interruption of said power distribution line.

2. An accessory device, according to claim 1, **characterized in that** said first electronic means generate said electrical intervention signal as a current intervention signal provided with a predefined current intensity, said first electronic means being connected to said power distribution line and to said RCCB according to an arrangement, which determines, once the intervention signal is generated, the presence of a predefined first imbalance current, which can be sensed by said sensor means.

3. An accessory device, according to one or more of previous claims, **characterized in that** said first electronic means comprises a first signal generation circuit, which is connected between the neutral conductor and a phase conductor of said power distribution line, downstream and upstream said sensor means.

4. An accessory device, according to claim 3, **characterized in that** said first signal generation circuit comprises:
- a first threshold circuit element, which is electrically connected, downstream said sensor means, to said neutral conductor of said power distribution line; and
- a first resistive element, which is serially connected to said first threshold circuit element and is connected, upstream said sensor means, to said phase conductor of said power distribution line.

5. An accessory device, according to one or more of claims from 1 to 2, **characterized in that** said first electronic means comprise a second signal generation circuit for generating said electrical intervention signal, which is connected between the neutral conductor and a phase conductor of said power distribution line, downstream and upstream said sensor means.

6. An accessory device, according to claim 5, **characterized in that** said first electronic means comprise a signal bypass circuit for bypassing said electrical intervention signal, when the value of the voltage of low voltage said power distribution line exceeds a second preset threshold value higher than said first preset threshold value, said signal bypass circuit being connected between said second signal generation circuit and said phase conductor of said power distribution line, downstream or upstream said sensor means.

7. An accessory device, according to one or more of claims from 5 to 6, **characterized in that** said second signal generation circuit comprises:
- a second threshold circuit element which is electrically connected, downstream said sensor means to said neutral conductor of said power distribution line; and
- a second resistive element and a third resistive element, which are both serially connected and are serially connected to said second threshold circuit element, said second resistive element or said third resistive element being electrically connected, upstream said sensor means, respectively to said phase conductor of said power distribution line.

8. An accessory device, according to claims from 5 to 7, **characterized in that** said signal bypass circuit comprises a third threshold circuit element, which is electrically connected to an electrical node, which is common between said second resistive element and said third resistive element, to said phase conductor, downstream or upstream said sensor means.

9. A low voltage power distribution switchboard **characterized in that** it comprises at least:
- a RCCB, coupled to a low voltage power distribution line; and
- an accessory device for protection against permanent overvoltages on said low voltage power distribution line, according to one or more of previous claims, said accessory device being associated to said RCCB.

10. A low voltage power distribution switchboard, according to claim 10, **characterized in that** said accessory device is at least partially included in the external casing of said RCCB, which said accessory device is associated therewith.

11. An low voltage power distribution switchboard, according to claim 10, **characterized in that** said accessory device is positioned substantially externally to the external casing of said RCCB, which said accessory device is associated therewith.

12. A low voltage power distribution switchboard, according to one or more of claims from 9 to 11, **characterized in that** said RCCB is of the electronic type.

13. A RCCB for low voltage applications **characterized in that** it includes, at least partially, an accessory device, according to one or more of claims from 1 to 8.

14. A RCCB, according to claim 13, **characterized in that** it is of the electronic type.
